# EUROPEAN PATENT APPLICATION

(11) **EP 4 014 823 A1**
(43) Date of publication of application: **22.06.2022**
(21) Application number: 20216153.5
(22) Date of filing: 21.12.2020
(51) Int. Cl.: A47J 47/14

(54) **COURIER DELIVERY BOX**

(71) Applicant: Dometic Sweden AB, 171 54 Solna (SE)
(72) Inventor: Zelena, Adrienn, Jaszberény 5100 (HU); Karlsson, Andreas, 18155 Lidingö (SE); Thelin, Mikael, 14142 Huddinge (SE); Bridge, Philip, 12650 Hägersten (SE)
(74) Representative: Grosse, Felix Christopher

(57) **Abstract**

The present invention relates to a courier delivery box 1 for transporting food, configured to be removably attached to a motorized and/or human-powered vehicle or bicycle, the courier delivery box 1 comprising a housing 2, an interior for storing the food, and a door 3 for providing access to the interior of the courier delivery box 1, wherein the courier delivery box 1 further comprises one or more removably inserted shelfs 17, at least two shelf positioning means 18 for providing optional positions for the shelfs 17 in the interior of the courier delivery box 1, such that the interior of the courier delivery box 1 can be variably subdivided into two or more compartments by selectively inserting each of the one or more shelfs 17 into the shelf positioning means 18, heating means for heating at least one of the compartments, and one or more functional units 5 arranged at a side of the courier delivery box 1, wherein the one or more functional units 5 comprise an electronics unit 6 including power supply means. Further, the present invention relates to a modular system including the courier delivery box of the invention and the cooling unit.

## Description

The present invention relates to a courier delivery box for transporting deliveries, in particular food or groceries. The courier delivery box according to the present invention is configured to be removably attached to a motorized and/or human-powered vehicle, for example a motor scooter, motorcycle or bicycle.

Courier delivery boxes are often found in urban areas being mounted at the rear of vehicles, like for example scooters or bicycles, and used to deliver in particular food or groceries to a purchaser or customer, for example a private household or the like. Besides mere transportation, one of the main purposes of such courier delivery boxes is to keep the deliveries in a certain state, in particular it is often required to keep the deliveries at a certain temperature and/ or in a certain arrangement. Usually, however, several customers are served one after the other during a delivery. By repeatedly opening the courier delivery box the temperature inside the box will be influenced by the entry of ambient air, in particular heat is lost, especially at cold outside temperatures. Furthermore, in some cases deliveries at a first specific temperature level are transported and delivered together with deliveries at a second different specific temperature level, for example hot food, like a pizza, is delivered in the same box as cold food, like ice cream, which is thereby warmed-up or vice versa. This effect is undesirable. Hence, there is a need for improvement for such courier delivery boxes.

In order to solve the above outlined problems, the present invention provides a courier delivery box for transporting deliveries, in particular food or groceries. The courier delivery box according to the present invention is configured to be removably attached to a motorized and/or human-powered vehicle. The courier delivery box comprises a housing, an interior for storing the deliveries, and a door for providing access to the interior of the courier delivery box. According to the present invention, the courier delivery box further comprises at least one shelf and at least two shelf positioning means for providing a plurality of optional shelf positions for the shelf in the interior of the courier delivery box. The at least one shelf is removably inserted removably inserted in one of said shelf positioning means such that the interior of the courier delivery box can be variably subdivided into a plurality of compartments by selectively inserting the at least one shelf into the shelf positioning means. The courier delivery box according to the present invention further comprises heating means for heating at least one of the compartments, and at least one functional unit arranged at a side of the courier delivery box, wherein the at least one functional unit comprises an electronics unit including power supply means.

The power supply means preferably includes at least one of a rechargeable battery and a cable connection. By the term "cable connection" it is meant that the electronics unit is configured to be connected with an external electric power source. As such the electronics unit may exemplarily be equipped with a respective socket or already with an integrated cable having a power plug.

Due to the heating means together with the variable position of the shelfs, the interior of the courier delivery box can be subdivided into an actively heated compartment, which for example is used for transporting and delivering hot food, and a compartment that is not heated, which for example is used for transporting and delivering cold food. Preferably, the compartments separated by the at least one shelf are arranged one above the other so that the deliveries can be inserted laterally, i.e. horizontally, either into the heated compartment or into the non-heated one. By this preferred arrangement it is further provided that a certain arrangement of the deliveries, for example a special arrangement of food on a plate, is maintained during transport and up to the delivery at the customers place. The kind of shelf positioning means is not particularly limited. Hence, in the scope of the present invention any means can be realized that are suitable to hold the shelfs in place. Preferably, the shelf positioning means are arranged at the vertical inner walls of the courier delivery box. Grooves, provided in pairs at the same height on the inner side walls adjacent to the door of the courier delivery box, represent an effective embodiment of the shelf positioning means in which the shelves can simply be inserted horizontally into the courier delivery box. At the same time, this variant ensures good and stable physical shielding or sealing of the compartments, so that there the deliveries can be stored and transported in a stable manner and there is little or nearly no temperature exchange between interior of the different compartments. Moreover, it is highly preferred that the grooves extend even all around the inner side walls, including the door area, which ensures a perfect physical sealing of the compartments against each other when the door is closed.

According to a preferred embodiment of the invention, the electronics unit includes a heating control unit. In this case, preferably the heating control unit is provided with a user interface for controlling the heating means. Alternatively, the courier delivery box can be equipped with a second and separate functional unit in form of a heating control unit for controlling the heating means. In this case, preferably the heating control unit is provided with a user interface for controlling the heating means. As such, a desired interior temperature can be adjusted.

According to a preferred embodiment of the invention, the courier delivery box has as a third and separate functional unit in from of an ambient unit. The ambient unit includes a fan for air exchange between at least one of the compartments and the environment. Thereby, a delivery, in particular food or grocery, which is stored in the compartment and which is to be stored and transported under ambient conditions can be put in the respective compartment. By means of the fan, a potential increase of temperature can be compensated. Furthermore, humidity can be kept low by the ventilation which increases hygienics.

According to a preferred embodiment of the invention, the courier delivery box has as a fourth and separate functional unit in from of a cooling unit. The cooling unit includes a cooling aggregate for cooling at least one of the compartments. Thereby, a compartment can be used for cold deliveries, like for example cold beverages or other food or grocery that is to be consumed cold. The kind of cooling aggregate is not particularly limited. Preferably, however, the cooling aggregate includes a compressor.

According to a preferred embodiment of the invention, at least one of the functional units is of a modular configuration so that it can be coupled to and decoupled from the courier delivery box. Thereby, the term "coupled to" does not necessarily mean that the respective functional unit has to be directly attached to the courier delivery box. The respective functional unit can also be indirectly coupled to the courier delivery box, for example, via an adapter, any suitable coupling means or even via another, separate functional unit. With the modular configuration, the courier delivery box can be equipped, as desired, with any number of different functional units so as to create different conditions in the compartments. Of course, the courier delivery box can be equipped with only one functional unit as well, being of any type, just as desired. As a preferred embodiment, at least the above-mentioned cooling unit is of modular configuration. Preferably, the cooling unit or cooling module can be sort of plugged into the courier delivery box at a designated docking location.

According to a further preferred embodiment of the invention, the cooling unit is removably attached to the ambient unit such that the air being drawn from the environment and supplied to at least one of the compartments by the fan of the ambient unit can be cooled by the cooling unit. Alternatively or alternatingly, and as a preferred more energy-efficient mode, the cooling unit and the fan of the ambient unit can be configured to generate together a circulating air cooling, without cooled air being vented to the outside. As such, the ambient unit serves at the same time as the above-mentioned docking or coupling location or adapter for the cooling unit. The cooling unit, however, can also be coupled to the courier delivery box separately from the ambient unit. In this case, the cooling unit preferably further includes a fan for air circulation. Depending on the outside temperature, the user can decide whether to attach the cooling unit or not. Consequently, as a further preferred aspect of the courier delivery box according to the present invention, a modular system is provided that includes the courier delivery box of the invention including all of its preferred embodiments and the modular cooling unit that is configured to be selectively attachable to and detachable from the courier delivery box.

According to a preferred embodiment of the invention, the electronics unit is covered and protected by a cover panel that is further preferably hinged. As such, damage and soiling of the electronics unit and in particular of the user interface, the battery or other power supply means, and other components of the electronics unit can be prevented. Most preferably, the hinged cover panel can be opened by pivoting it in a downwards direction. This represents a comfortable and space-saving way of opening and closing the hinged cover panel. Further preferably, the opened hinged cover panel comes to and is hold in a rest in a horizontal position. Preferably, manual instructions can be provided inside the hinged cover panel that can be studied by the user in a comfortable and hands-free manner.

According to a preferred embodiment of the invention, the hinged cover panel comprises a gasket. Such a gasket keeps water and other material away from the user interface, the battery or other power supply means, and possible further electronic parts located inside the electronics unit.

According to a preferred embodiment of the invention, the electronics unit forms a gap at a lower part of said hinged cover panel for routing a cable to the electronics unit through the cable routing gap, even when the hinged cover panel is closed. Thereby, the hinged cover panel does not have to stay open during an established cable connection.

According to a preferred embodiment of the invention, the electronics unit includes a lock for locking the hinged cover panel. This prevents unauthorized adjustments at the user interface, when the courier delivery box is unattended.

The position of the heating means is not particularly limited and can be varied depending on the exact design of the courier delivery box. According to a preferred embodiment of the invention, however, the heating means includes a heating element which is located in an upper portion of the interior of the courier delivery box. Hence, at least the uppermost compartment of the courier delivery box can be heated. Preferably, the heating element is located beneath an inner lining of the courier delivery box.

Also the kind of heating means or heating element is not particularly limited. Preferably, however, an auxiliary heater with a fan based on the working principle of resistance heating is used. Due to the fan circulated air flow improved heat distribution can be achieved. This kind of heating provides dynamic heating with fast response in start and stop, and further allows to use high heating power. This technical design increases, next to the overall usability and functions, the safety of the courier delivery box as well. Of course, it is also possible to use multiple heaters to achieve further variability in the product performance.

According to a preferred embodiment of the invention, the courier delivery box further comprises at least one ionizer for purifying the air inside at least one of the compartments. As such, dust particles become charged by ions generated by the ionizer and are then attracted and can therefore not deposit on the food. Further preferably, one ionizer is arranged at an upper region inside the courier delivery box and one ionizer is arranged at a lower region inside the courier delivery box, Thereby, at least the air of the uppermost and the lowest compartment is cleaned.

According to a preferred embodiment of the invention, the interior is lined with a food-safe material. At the same time, the food-safe material is preferably washable and resistant to a wide range of cleaning agents, in particular acid and base resistant.

According to a preferred embodiment of the invention, the courier delivery box is temperature-insulated. Preferably, the housing and the door of the courier delivery box include a suitable temperature isolation material. For example, a plastic foam component, preferably expanded polypropylene, with a thickness of between 10 and 45 mm is a suitable material in this regard. Of course, in the scope of the present invention other suitable materials can be used as well.

According to a preferred embodiment of the invention, the door is hinged to the housing so as to be pivotable about a vertical axis. Further preferably, the door has a handle to be grabbed by the user for opening and closing the door. Preferably, the handle is an angled flat piece of metal, preferably steel or aluminium. As such the handle is of a robust design and the door is easily to be opened or closed.

According to a preferred embodiment of the invention, the outside of the housing and/ or of the door are finished with metal, preferably with anodized aluminium. This increases the stability and resistance of the courier delivery box and, at the same time, imparts shielding properties of the courier delivery box.

According to a preferred embodiment of the invention, the courier delivery box comprises a lock for locking the door. The lock can be of a mechanical type using a physical key or of an electronic type using a key card, key code or any other suitable electronic means, comprising wired and wireless configurations, for example an app on a smart phone. The lock prevents an unauthorized opening of the courier delivery box, in particular when the courier delivery box is unattended. Preferably, the door lock is similar to the above-mentioned lock of the hinged cover panel. In this case, both locks can be opened with only one key or electronic device.

According to a preferred embodiment of the invention, the at least one shelf is composed of a perforated metal sheet or a temperature insulating plastic board. In case of a plurality of shelfs at least one of the plurality of shelfs is composed of a perforated metal sheet or a temperature insulating plastic board. As a space saving shelf for establishing two compartments of the same climate, the perforated metal sheet can be chosen. The insulating plastic board is preferably made-up of a reinforced foam material.

In the above defined invention and preferred embodiments thereof, terms that indicate an orientation, like "vertical", "horizontal", "lateral" and so on, refer to the courier delivery box standing upright on the ground or being readily mounted onto the motorized and/or human-powered vehicle.

In the following, a preferred embodiment of the present invention will be described in more detail and by referring to the appended drawings, in which
- FIG. 1: shows a perspective view to the rear and to a side of an embodiment of the courier delivery box;
- FIG. 2: shows a perspective view inside the courier delivery box according to the embodiment shown in FIG. 1;
- FIG. 3: shows a plurality of different perspectives of the embodiment shown in FIG. 1; and
- FIG. 4: shows an enlarged section of the embodiment shown in FIG. 1 and illustrates a coupling- and decoupling process of a functional module.

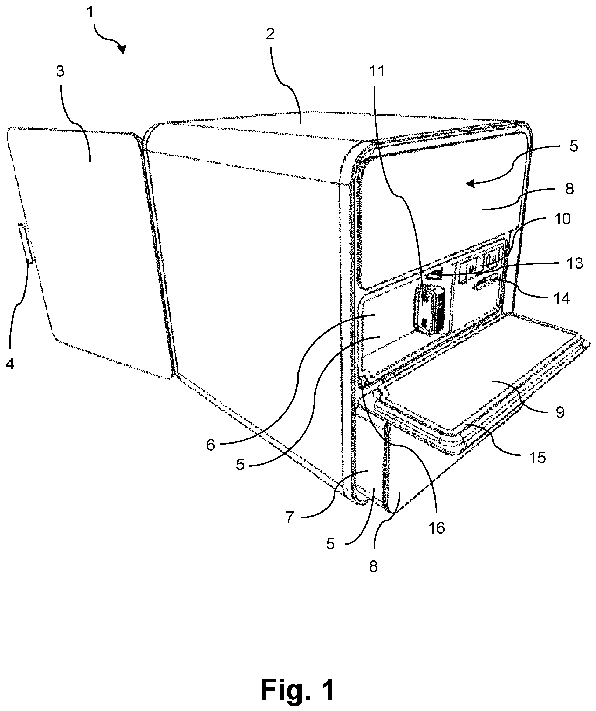

In FIG. 1, a perspective side and rear view of an embodiment of the courier delivery box 1 according to the present invention is shown. At the rear side of the courier delivery box 1, at least one of the functional units 5 is located. In the present embodiment, although in general only one functional unit 5 or any number of functional units 5, just as desired, may be comprised by the courier delivery box 1 as well, a plurality of functional units 5 is coupled to the of the courier delivery box 1. In the present embodiment the functional units 5 are located one above the other. Each of the functional units 5 is covered by the cover panels 8 or the hinged cover panel 9, respectively, which is the case of the electronics unit 6. At the opposite side of the functional units 5, the door 3 is located. The door 3 is hinged to the housing 2 and shown in an open position. Apart from the functional units 5 and the door 3, the housing 2 is essentially shaped like a rectangular and essentially tube-like body with rounded edges 28, This particular shape prevents wear and tear of the courier delivery box 1 and reduces the risk of injury. The housing 2 includes a core part of a plastic foam material which is covered by a metal sheeting 29. In the present embodiment, the metal sheeting is of aluminium. Due to the above-mentioned rounded edges 28 of the housing 2, only one sheet of metal material is wrapped around all four edges 28 of the housing 2, which results in a high durability of the courier delivery box 1. The surface of the aluminium sheathing is furthermore anodized.

The door 3 has also a plastic foam material as a core part and is covered by a flat anodized metal sheet, in particular by an aluminium sheet. The door 3 is hinged at one side and pivotable about a vertical axis. At the other side, the handle 4 of the door 3 is arranged which is designed as an angled flat steel component.

At the rear side of the courier delivery box 1 according to the present embodiment, the courier delivery box 1 provides three positions for coupling functional units to the courier delivery box 1. The three positions are located on top of each other. The scope of the present invention is however not limited to three positions, but other numbers of positions are included. The functional unit 5 placed in the middle position is the electronics unit 6. The hinged cover panel 9 at the electronics unit 6 is in the open position in which the hinged cover panel 9 rests in a horizontal position. At the inside of the hinged cover panel 9, the gasket 15 is provided. The gasket 15 extends all around the edge of the hinged cover panel 9, in order to seal the electronics unit 6 and to protect it from water or other material. At the lower left-hand side of the electronics unit 6, cut-outs are provided at the body of the electronics unit 6 and the hinged cover panel 9 forming the cable routing gap 16, so that a route is provided for the cable connection 12 while the hinged cover panel 9 is closed. The gasket 15 is configured and arranged in that it avoids entry of water and other material even if a cable routing gap 16 is provided. In the present embodiment, the cable connection 12 is realized in the form of the power cable socket 13.

The electronics unit 6 includes the battery 11 which is inserted into a designated pocket or recess of the electronics unit 6. In order to ease removal of the battery 11 from the pocket, the pocket is provided with the opening or slot 14 through which the user can push the battery 11 to the side. As such, the battery 11 can either be charged inside the electronics unit 6 via the cable connection, or replaced by a full battery 11.

The electronics unit 6 includes a user interface 10. By the user interface 10 specific operation modes and functional parameters of the courier delivery box 1 can be selected or adjusted by the user. The user interface 10 includes a display that displays information such as the remaining battery life to the user.

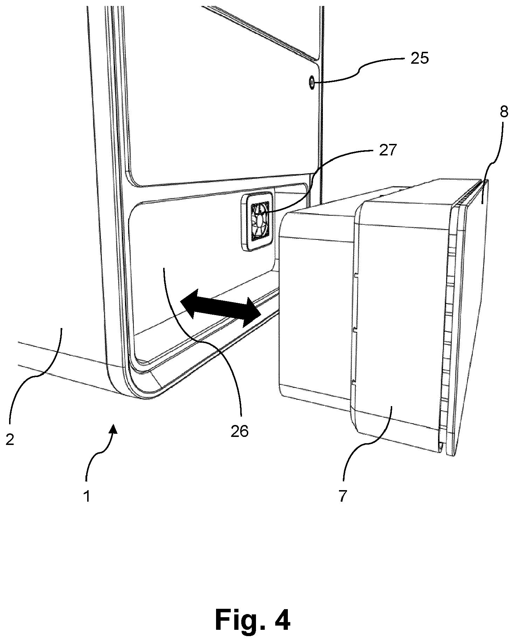

As the functional unit 5 placed in the bottom or low position, the courier delivery box 1 according to this embodiment includes the cooling unit 7. The cooling unit 7 in turn is covered by the cover panel 8. As will be described in more detail with regard to FIG. 4 further below, the cooling unit 7 is of a modular configuration and is attached to the ambient unit 26.

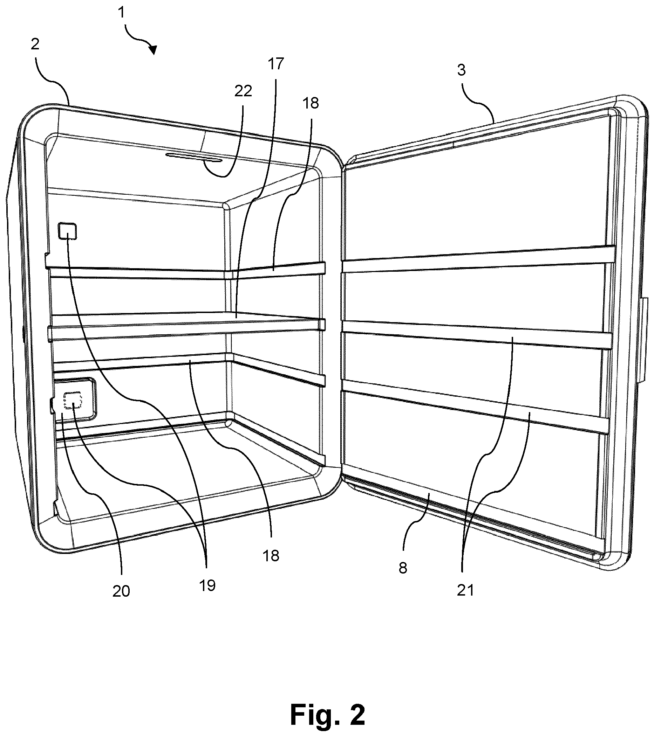

FIG. 2. illustrates the courier delivery box 1 in a perspective front view in an open state, i.e. with the door 3 in the opened position. In addition to the above-described components and configurations of the courier delivery box 1 of the present invention and its preferred embodiments, the courier delivery box 1 may further include one or more illumination means in the interior of the courier delivery box 1, like for example a lamp 22, as shown in FIG. 2. In the shown embodiment, the lamp 22 is arranged in the vicinity of the upper edge of the housing 2 at the side of the door 3, in order to illuminate the uppermost compartment when the door is in its opened position. The walls of the housing 2 are rather thick due to the temperature-insulating core material. Therefore, the lamp 22 can be installed without any problem at a selected location into the wall without projecting from the surface of the wall to the interior of the courier delivery box 1. In this connection, the term "wall" also refers to the ceiling, the ground and the door 3 of the courier delivery box 1. In the present case the lamp 22 is of an LED type, but any other type of illumination means or lamp can be used as well.

In FIG. 2, the shelf positioning means 18 can be identified. In the shown embodiment, shelf positioning means 18 are designed as horizontal grooves. The horizontal grooves are provided at the inner surface or lining of the courier delivery box 1 each of which extends all around the vertical walls of the housing 2. The horizontal grooves are designed to fit with the shelf 17 in order to accommodate it in the respective position inside the courier delivery box 1. In order to provide an even more improved closure between the thereby established compartments, corresponding shelf edge joints 21 are present at the inner surface of the door 3. In the shown embodiment, one temperature-insulating shelf 17 is inserted in the central one of the three available shelf positioning means 18. With this configuration, the interior of the courier delivery box 1 is subdivided into two compartments, an upper compartment that can be heated by a heating element (not shown) which is installed in the upper part of the housing 2 underneath the inner lining of the courier delivery box 1, and a lower compartment to which the cooling unit 7 is assigned. Of course, it lies within the scope of the present invention to select another number of shelf positioning means 18 than three and/ or another number of shelfs 17 than one, in order to create additional compartments, just as desired.

The heating element, in this embodiment, is an auxiliary heater with a fan based on the working principle of resistance heating. Due to the fan circulated air flow improved heat distribution can be achieved. This kind of heating makes provides dynamic heating with fast response in start and stop, and further allows to use high heating power.. This increases the safety of the courier delivery box 1 and further helps to safe energy.

At the inner rear wall of the courier delivery box 1, as illustrated in FIG. 2, the fan protective cover 20 can be identified. Air that is forced by the fan 27 passes through a gap between the inner wall and the edges of the fan protective cover 20. In the center of the fan protective cover 20 and at the inner rear wall in the upper compartment, ionizers 19 are present. The ionizers 19 are capable of cleaning the air inside the respective compartment by generating ions which are attracted by dust particles, allergens, bacteria and the like, which thereby become charged and are then attracted by the ionizer 19.

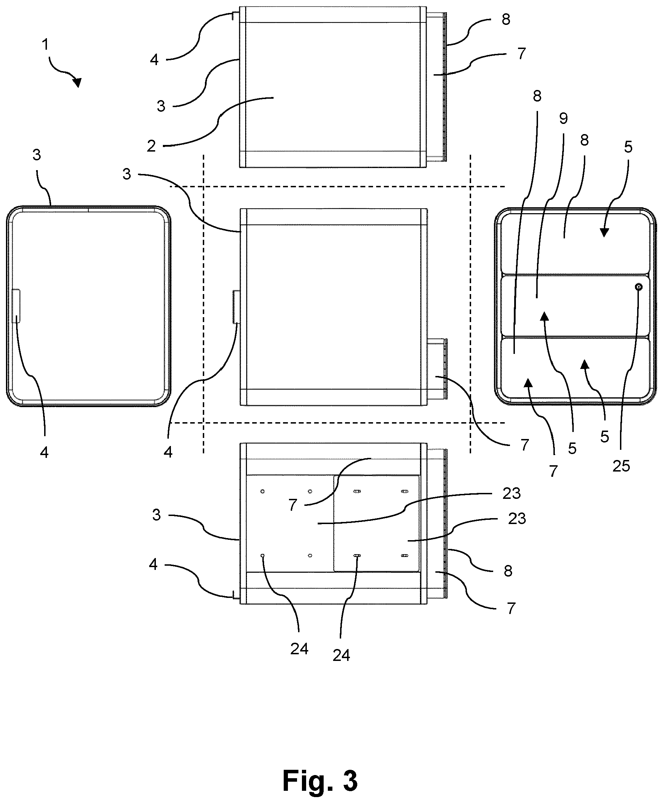

FIG. 3 illustrates the courier delivery box 1 in different perspectives. Thereby, the dashed lines indicate the axes around which the courier delivery box 1 is rotated from one perspective to an adjacent one. In the center of FIG. 3, a side view of the courier delivery box 1 is shown with the door 3 (front side) at the left and the functional units 5 (rear side) at the right-hand side. As can be seen, the cover panels 8, except from the one covering the cooling unit 7, do not project out of the plane defined by the rim or projection of the housing 2 at the rear side. The door 3 is co-planar with the plane defined by the edge of the housing 2 at the front. This results in a compact and solid appearance and reduces the risk of damage to the functional units 5 and the door 3. The handle 4 on the door 3 is designed rather small so that damage and injuries can be reduced.

The upper perspective illustrates the top view, whereas the lower one illustrates the view from below onto the courier delivery box 1. At the bottom, the courier delivery box 1 has a base plate 23 (in this embodiment, two base plates 23). The base plate 23 is finished flush with the metal sheathing 29 which extends over the four rounded edges 28 of the housing 2. At the base plates 23 mounting bores 24 are provided for mounting the courier delivery box 1 to the motorized and/or human-powered vehicle. For this purpose, the base plates 23 are formed significantly thicker than the metal sheathing 28 in order to provide more stability.

In FIG. 4, the preferred modular concept according to the present invention is illustrated with reference to the cooling unit 7. The enlarged perspective view on the rear side of the courier delivery box 1 shows the ambient unit 26 with its fan 27. The cooling unit 7 or module has a casing that fits into a recess formed in the ambient unit 26. In this embodiment, the cooling unit 7 snaps in place when being inserted into the recess of the ambient unit 26 which is one of several options of coupling the cooling unit 7 to the ambient unit 26. Once inserted, the air inside the respective compartment of the courier delivery box 1 a circuit of cooled air is established in which the air of the respective compartment is circulated by the fan 27 and cooled down by the cooling unit 7, in the present embodiment, the evaporator side of the cooling unit 7. At the respective other side of the cooling unit 7, here the compressor side, heat energy in the form of hot air can dissipate to the environment by convection. In particular, the cover panel 8 covering the cooling unit 7 is configured to let the air pass through, in the present embodiment, by means of a plurality of fins 30. The plurality of fins 30 route the air between the cooling unit 7 and the cover panel 8.

The cover panel 8 is configured to be inserted into both the cooling unit 7 and the ambient unit 26. In case the cooling unit 7 is not used, the cooling unit 7 can be retracted or otherwise removed from the recess of the ambient unit 26. The cover panel 8 is then separated from the cooling unit 7 and inserted into the ambient unit 26. In this case, the lower compartment of the courier delivery box 1 has ambient conditions and the air forced by the fan 27 can circulate through the fins 30 of the cover panel 8.

The technical experts in the field will appreciate that the details of the various components of the exemplary embodiment of the courier delivery box 1 described herein should not, in principle, be regarded as inseparable from one another, unless it is expressly so stated or follows from pure logic.

### REFERENCE SIGNS

- 1: Courier delivery box
- 2: Housing
- 3: Door
- 4: Handle
- 5: Functional unit
- 6: Electronics unit
- 7: Cooling unit
- 8: Cover panel
- 9: Hinged cover panel
- 10: User interface
- 11: Battery
- 12: Cable connection
- 13: Power cable socket
- 14: Slot
- 15: Gasket
- 16: Cable routing gap
- 17: Shelf
- 18: Shelf positioning means
- 19: Ionizer
- 20: Fan protective cover
- 21: Shelf edge joint
- 22: Lamp
- 23: Base plate
- 24: Mounting bore
- 25: Lock of cover panel
- 26: Ambient unit
- 27: Fan
- 28: Rounded edge
- 29: Metal sheathing
- 30: Fin

## Claims

1. Courier delivery box (1) for transporting deliveries, in particular food or groceries, the courier delivery box (1) being configured to be removably attached to a motorized and/or human-powered vehicle, the courier delivery box (1) comprises:
a housing (2);
an interior for storing the deliveries; and
a door (3) for providing access to the interior of the courier delivery box (1);
**characterized in that**
the courier delivery box (1) further comprises at least one shelf (17);
at least two shelf positioning means (18) for providing a plurality of positions for the shelfs (17) in the interior of the courier delivery box (1), wherein the at least one shelf (17) is removably inserted in one of said shelf positioning means (18) such that the interior of the courier delivery box (1) can be variably subdivided into a plurality of compartments by selectively inserting the at least one shelf (17) into the shelf positioning means (18);
heating means for heating at least one of the compartments; and
at least one functional unit (5) arranged at a side of the courier delivery box (1), wherein the at least one functional unit (5) comprises an electronics unit (6) including power supply means.

2. The courier delivery box (1) according to claim 1, **characterized in that**
the electronics unit (6) includes a heating control unit for controlling the heating means, or **in that** the courier delivery box (1) comprises a second functional unit (5), the second functional unit (5) is a heating control unit for controlling the heating means.

3. The courier delivery box (1) according to claim 1 or 2, **characterized in that**
the courier delivery box (1) comprises a third functional unit (5), the third functional unit (5) is an ambient unit (26) including a fan (27) for air exchange between at least one of the compartments and the environment.

4. The courier delivery box (1) according to any one of the preceding claims, **characterized in that**
the courier delivery box (1) comprises a fourth functional unit (5), the fourth functional unit is a cooling unit (7) including a cooling aggregate for cooling at least one of the compartments.

5. The courier delivery box (1) according to claim 4, **characterized in that**
the cooling aggregate includes a compressor.

6. The courier delivery box (1) according to any one of the preceding claims, **characterized in that**
at least one of the functional units (5) is of a modular configuration so that it can be coupled to and decoupled from the courier delivery box (1).

7. The courier delivery box (1) according to claims 4 and 6, **characterized in that** at least the cooling unit (7) is of the modular configuration.

8. The courier delivery box (1) according to claims 3 and 7, **characterized in that**
the cooling unit (7) is removably attached to the ambient unit (26) such that the air being drawn from the environment and supplied to at least one of the compartments by the fan (27) can be cooled by the cooling unit (7).

9. The courier delivery box (1) according to any one of the preceding claims, **characterized in that**
the electronics unit (6) has a hinged cover panel (9).

10. The courier delivery box (1) according to claim 9, **characterized in that**
the hinged cover panel (9) comprises a gasket (15).

11. The courier delivery box (1) according to claim 9 or 10, **characterized in that**
the electronics unit (6) forms a cable routing gap (16) at a lower part of the hinged cover panel (9) for routing a cable to the electronics unit (6) through the cable routing gap (16).

12. The courier delivery box (1) according to any one of claims 9 to 11, **characterized in that**
the electronics unit (6) includes a lock (25) for locking the hinged cover panel (9).

13. The courier delivery box (1) according to any one of the preceding claims, **characterized in that**
the heating means includes a heating element, the heating element being located in an upper portion of the interior of the courier delivery box (1) for heating at least the uppermost compartment of the courier delivery box (1).

14. The courier delivery box (1) according to any one of the preceding claims, **characterized in that**
the courier delivery box (1) further comprises at least one ionizer (19) for purifying the air inside of at least one of the compartments.

15. The courier delivery box (1) according to any one of the preceding claims, **characterized in that**
the interior of the courier delivery box (1) is lined with a food-safe material.

16. The courier delivery box (1) according to any one of the preceding claims, **characterized in that**
the courier delivery box (1) is temperature-insulated.

17. The courier delivery box (1) according to any one of the preceding claims, **characterized in that**
the door (3) is hinged to the housing (2) so as to be pivotable about a vertical axis and/ or the door (3) has a handle (4).

18. The courier delivery box (1) according to any one of the preceding claims, **characterized in that**
the outside of the housing (2) and/ or of the door (3) is/ are finished with metal.

19. The courier delivery box (1) according to any one of the preceding claims, **characterized in that**
the courier delivery box (1) further comprises a door lock for locking the door (3).

20. The courier delivery box (1) according to any one of the preceding claims, **characterized in that**
the at least one shelf (17) is composed of a perforated metal sheet or a temperature insulating plastic board.

21. A modular system including the courier delivery box (1) according to any one of the preceding claims and the cooling unit (7) as defined at least in claim 7.
